# DEMANDE DE BREVET EUROPEEN

(11) **EP 1 462 024 A1**
(43) Date de publication de la demande: **29.09.2004**
(21) Numéro de dépôt: 04290269.2
(22) Date de dépôt: 02.02.2004
(51) Int. Cl.: A45D 40/22

(54) **Boîtier comportant une articulation ayant un élément à boucles et un élément à crochets**

(30) Priorité: 04.02.2003 FR 0301267
(71) Demandeur: L'OREAL, 75008 Paris (FR)
(72) Inventeur: Gueret, Jean-Louis, 75016 Paris (FR)
(74) Mandataire: Tanty, François

(57) **Abrégé**

La présente invention concerne un boîtier comportant : au moins une partie de base (2), un couvercle (3), une articulation reliant le couvercle à la partie de base.

L'articulation comporte : un premier élément fixé sur la partie de base (2) et un deuxième élément (5) fixé sur le couvercle (3), l'un desdits premier et deuxième éléments étant à boucles et l'autre desdits premier et deuxième éléments étant à crochets agencés pour coopérer avec lesdites boucles.

## Description

La présente invention concerne les boîtiers et plus particulièrement mais non exclusivement ceux destinés à contenir des applicateurs et/ou des produits cosmétiques.

De tels boîtiers comportent généralement une partie de base et un couvercle relié par une articulation à la partie de base, cette articulation pouvant comporter un axe métallique.

US 6 216 899 décrit une caisse pour le transport de pièces automobiles comportant des bandes de type VELCRO® pour maintenir un couvercle sur chacun de ses côtés sur le reste de la caisse. Ces bandes ne définissent nullement des articulations.

L'invention a pour objet un nouveau boîtier qui peut se caractériser, selon un premier aspect de celle-ci, par le fait que l'articulation comporte un premier élément fixé sur la partie de base et un deuxième élément fixé sur le couvercle, l'un des premier et deuxième éléments étant à boucles et l'autre à crochets. Les boucles et les crochets sont agencés pour coopérer.

Des éléments à boucles et à crochets sont commercialisés notamment sous la forme de bandes sous la marque VELCRO® et sont largement utilisés comme moyens de fixation, les crochets étant réalisés par exemple par moulage de matière plastique et les boucles étant formées par un tissé ou un non-tissé. Les crochets et les boucles peuvent coopérer pour s'accrocher, au moins une partie des crochets s'engageant dans les boucles.

Le terme « crochet » ne doit pas être compris avec un sens limitatif et englobe des extrémités à double crochet ou à tête élargie. Le terme « boucle » ne doit pas non plus être interprété de manière restrictive et englobe les boucles ouvertes ou fermées. Ainsi, les premier et deuxième éléments comportent des moyens d'accrochage de types complémentaires répartis sur leur surface et propres à réaliser un accrochage mécanique lorsque réunis.

L'invention permet de réaliser une articulation sans avoir à utiliser d'axe métallique, contrairement aux articulations conventionnelles.

L'invention permet en outre de réaliser des boîtiers dans lesquels le couvercle peut si nécessaire être entièrement désolidarisé de la partie de base, ce qui peut permettre par exemple d'utiliser plusieurs parties de base associées à un même couvercle, lequel peut comporter par exemple un miroir, les différentes parties de base pouvant comporter des produits de couleurs et/ou de natures différentes et/ou des applicateurs différents.

Une seule partie de base peut être utilisée avec le couvercle, mais en variante plusieurs parties de base peuvent être utilisées avec un même couvercle, les parties de base pouvant se superposer, l'une au moins des parties de base servant de couvercle pour une autre partie de base sous-jacente.

Dans la suite, les termes « arrière », « avant », « supérieur » et « inférieur » se réfèrent au boîtier lorsqu'il est observé à l'état fermé et que l'articulation est située le plus en arrière de l'observateur, le boîtier s'ouvrant en commençant par faire basculer le couvercle vers le haut et vers l'arrière.

La partie de base présentant des faces arrière et supérieure, le premier élément peut s'étendre sur ces faces arrière et supérieure. Le couvercle présentant des faces arrière et inférieure, le deuxième élément peut s'étendre sur ces faces arrière et inférieure, de manière à coopérer avec le premier élément.

Le boîtier peut comporter au moins un troisième élément sur la face supérieure de la partie de base. Le boîtier peut comporter au moins un quatrième élément sur la face inférieure du couvercle et l'un des troisième et quatrième éléments peut être à boucles et l'autre à crochets, les troisième et quatrième éléments étant disposés de manière à s'accrocher lorsque le boîtier est dans une position fermée.

La partie de base présentant une face inférieure, le boîtier peut comporter sur cette face inférieure au moins un cinquième élément, lequel peut être à boucles ou à crochets.

Dans une réalisation particulière, ce cinquième élément présente une nature complémentaire de celle du troisième élément, ce cinquième élément étant positionné sur la face inférieure de la partie de base de manière à pouvoir s'accrocher avec au moins un autre troisième élément présent sur une partie de base sous-jacente, positionnée sous ladite face inférieure. Le boîtier peut comporter sur la face inférieure de la partie de base au moins un sixième élément agencé pour s'accrocher avec un autre premier élément d'une partie de base sous-jacente, disposée sous ladite face inférieure. Cela permet de solidariser entre elles les parties de base.

Le premier élément peut comporter au moins deux parties distinctes, notamment deux parties disposées à proximité de faces latérales opposées respectives de la partie de base. Les deux parties distinctes peuvent être de même nature ou présenter des natures complémentaires. Le deuxième élément peut comporter au moins deux parties distinctes disposées sur le couvercle de manière correspondante.

Le premier élément peut présenter au moins une portion qui s'étend sur la face supérieure de la partie de base et cette portion peut présenter une largeur non constante, notamment une largeur augmentant en rapprochement de la face arrière de la partie de base. Cela peut permettre de faciliter l'ouverture du boîtier, le cas échéant.

Le premier élément peut comporter des portions fixées sur des surfaces sensiblement planes. Le premier élément peut comporter également au moins une portion fixée sur une surface non plane, notamment une surface cylindrique de révolution.

L'un du couvercle et de la partie de base peut comporter une patte comportant un élément à boucles ou à crochets et l'autre du couvercle et de la partie de base peut comporter une partie servant à l'accrochage de cette patte.

Le premier élément peut s'étendre partiellement sur au moins une face latérale de la partie de base et le deuxième élément peut s'étendre partiellement sur au moins une face latérale du couvercle. Cela peut permettre d'assembler latéralement le couvercle et la partie de base après l'ouverture du boîtier. Le premier élément peut s'étendre à la fois sur les faces supérieure, arrière et sur une face latérale au moins de la partie de base.

La partie de base et le couvercle peuvent présenter chacun un contour rectangulaire ou non, notamment circulaire, lorsqu'observés de dessus, et les premier et deuxième éléments peuvent s'étendre sur des portions respectives de la circonférence de la partie de base et du couvercle. Ces portions peuvent correspondre chacune par exemple au moins à un quart de la circonférence.

L'un au moins des premier et deuxième éléments peut être fixé au moins partiellement dans un renfoncement de la partie de base ou du couvercle. C'est de préférence un élément à crochets qui est fixé dans un renfoncement de la partie de base ou du couvercle, la profondeur de ce renfoncement pouvant être suffisante pour que les crochets ne dépassent pas sensiblement à l'extérieur du renfoncement.

L'un au moins de la partie de base et du couvercle peut comporter un relief agencé pour coopérer avec un relief complémentaire de l'autre du couvercle et de la partie de base, de manière à positionner toujours de la même manière le couvercle par rapport à la partie de base quand le boîtier est fermé.

La partie de base peut comporter également un relief sur sa face inférieure, ce relief étant agencé pour coopérer avec un relief de la face supérieure d'une autre partie de base afin de positionner cette autre partie de base relativement à la première.

La partie de base peut comporter un logement recevant au moins un produit, notamment un produit contenu dans une coupelle. La partie de base peut comporter en variante ou additionnellement un logement recevant au moins un applicateur. Le fond de ce logement peut comporter un élément à crochets ou à boucles agencé pour retenir l'applicateur.

Le couvercle peut comporter un miroir, notamment sur sa face inférieure.

L'invention a encore pour objet une partie de base ou un couvercle considéré isolément.

Une telle partie de base ou un tel couvercle peut être commercialisé(e) séparément, par exemple sous un blister, afin de constituer par exemple une recharge ou un couvercle de rechange ou permettre à l'utilisateur disposant déjà d'un boîtier comportant un couvercle et une partie de base d'y adjoindre au moins une deuxième partie de base.

La présence d'éléments à crochets ou à boucles sur l'une des faces extérieures du boîtier peut, le cas échéant, réduire le risque de mouvement du boîtier lors de son transport dans un sac ou un vanity-case, en prévoyant sur ceux-ci des moyens d'accrochage adaptés.

Le boîtier peut présenter une forme générale aplatie.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique en perspective d'un exemple de boîtier réalisé conformément à l'invention,
- la figure 2 est une coupe schématique et partielle selon II-II de la figure 1,
- la figure 3 est une vue de dessous selon la flèche III de la figure 1,
- la figure 4 représente le boîtier de la figure 1 en position fermée, avec une deuxième partie de base sous la première,
- la figure 5 est une vue schématique illustrant l'accrochage des parties arrière des différentes parties de base du boîtier de la figure 4,
- la figure 6 illustre la possibilité de réaliser le boîtier avec un fermoir apparent,
- la figure 7 illustre la réalisation en deux parties d'un élément de l'articulation,
- la figure 8 représente une variante de réalisation de l'arrière de la partie de base,
- la figure 9 illustre la possibilité de réaliser un élément de l'articulation avec une largeur variable,
- la figure 10 représente très schématiquement une autre variante de réalisation du boîtier,
- la figure 11 illustre la possibilité d'avoir des éléments à boucles ou à crochets sur trois faces au moins de la partie de base ou du couvercle,
- la figure 12 représente une autre variante de réalisation du boîtier,
- les figures 13 et 14 illustrent de manière schématique la possibilité d'accrochage latéral ou longitudinal de deux parties de base dans une autre variante de réalisation,
- la figure 15 illustre la possibilité de réaliser le décrochement 24 avec un chanfrein,
- la figure 16 illustre la possibilité de prévoir au fond d'un logement destiné à recevoir un applicateur un élément à boucles ou à crochets,
- la figure 17 représente de manière schématique en perspective une variante de réalisation du fermoir,
- la figure 18 est une vue schématique en perspective d'une variante de réalisation du boîtier dans laquelle l'articulation s'étend sur toute la largeur de la partie de base et du couvercle,
- la figure 19 illustre une façon de positionner le couvercle sur la partie de base lors de l'assemblage initial du boîtier, et
- la figure 20 illustre la possibilité de réaliser au moins l'un des premier et deuxième éléments de manière à ce que celui-ci soit mobile.

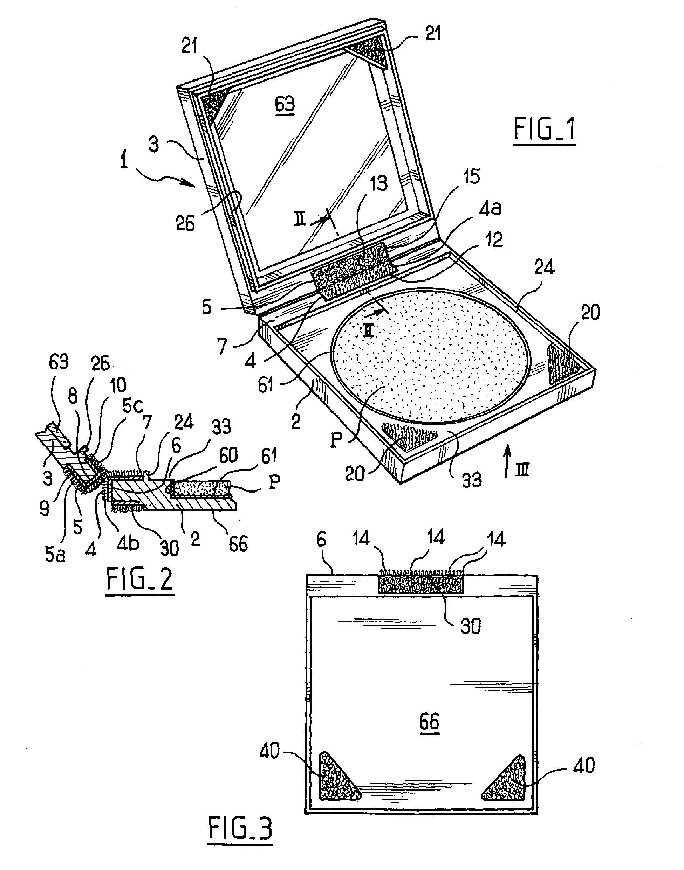

Le boîtier 1 représenté à la figure 1 comporte une partie de base 2 et un couvercle 3 articulé sur la partie de base 2 au moyen d'une articulation comportant deux éléments 4 et 5 respectivement fixés sur la partie de base 2 et le couvercle 3.

Comme on peut le voir plus particulièrement sur la figure 2, le premier élément 4 s'étend sur les faces arrière 6 et supérieure 7 du boîtier 2 tandis que le deuxième élément 5 s'étend sur les faces arrière 8, supérieure et inférieure 10 du couvercle.

Conformément à l'invention, l'un des éléments 4 et 5 est à crochets 14 et l'autre élément à boucles 13. Dans l'exemple considéré, c'est le premier élément 4 qui est à crochets et le deuxième élément 5 qui est à boucles, mais on pourrait avoir l'inverse sans sortir du cadre de la présente invention.

Les éléments à crochets et à boucles sont par exemple réalisés par des portions bandes Velcro® de natures complémentaires, respectivement collées sur la partie de base 2 et sur le couvercle 3. Les éléments à crochets et à boucles pourraient encore être fixés autrement sur la partie de base 2 et le couvercle 3, par exemple par soudage ou encliquetage notamment.

Dans l'exemple considéré, la portion 4a du premier élément 4 qui s'étend sur la face supérieure 7 de la partie de base 2 est disposée dans un renfoncement 12 de celle-ci, qui s'étend de manière centrée sur sensiblement un tiers de la longueur de son côté arrière.

Les portions 5a et 5c du deuxième élément 5 qui s'étendent respectivement sur les faces supérieure 9 et inférieure 10 du couvercle sont disposées dans des renfoncements de celui-ci, seul le renfoncement 15 recevant la portion 5c étant apparent sur la figure 1.

Le deuxième élément 5 présente sensiblement la même largeur que le premier élément 4 et les deux éléments 4 et 5 peuvent coopérer lors de l'ouverture du boîtier pour garder le couvercle 3 solidaire de la partie de base 2 tout en permettant à celui-ci de pivoter vers l'arrière par rapport à cette dernière.

Le couvercle 3 peut également être désolidarisé, si on le souhaite, de la partie de base 2 en exerçant une traction suffisante.

Dans l'exemple considéré, le boîtier 1 peut être maintenu en position fermée par coopération entre au moins un troisième élément 20 présent sur la partie de base 2, à savoir deux éléments 20, et au moins un quatrième élément 21 solidaire du couvercle 3, à savoir deux éléments 21.

Les éléments 20 sont à crochets dans l'exemple illustré et les éléments 21 sont à boucles, mais l'inverse pouvant être vrai sans que l'on sorte du cadre de la présente invention.

Chaque élément 20 occupe, dans l'exemple considéré, un coin avant de la partie de base 2, et présente une forme généralement triangulaire lorsqu'observé de dessus. Les éléments 21 sont placés dans les coins avant du couvercle de manière à s'accrocher sur les éléments 20 lorsque le boîtier est fermé.

Des moyens sont prévus pour positionner le couvercle 3 par rapport à la partie de base 2 lorsque le boîtier 1 est fermé.

Dans l'exemple considéré, ces moyens comportent d'une part un décrochement 24 réalisé sur la partie de base 2, définissant un logement 33, ce décrochement 24 ayant, par exemple, lorsque la partie de base 2 est observée de dessus, un contour sensiblement carré, et d'autre part une nervure 26 correspondante réalisée sur le couvercle 3, cette nervure 26 étant agencée pour s'emboîter à l'intérieur du décrochement 24 lorsque le boîtier 1 est fermé.

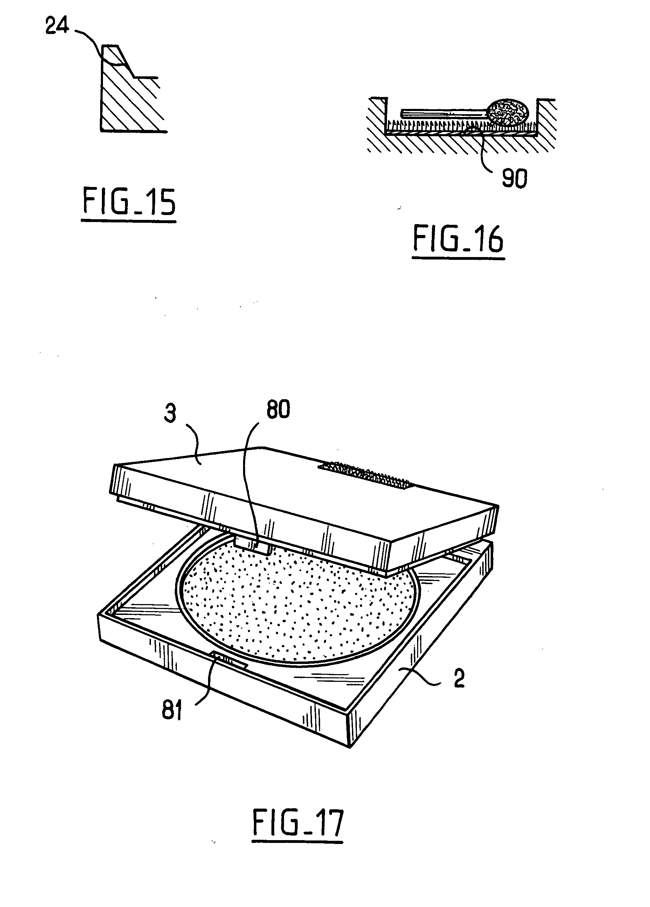

Le décrochement 24 peut présenter un flanc droit comme on peut le voir sur la figure 2 ou en variante un chanfrein, comme illustré sur la figure 15.

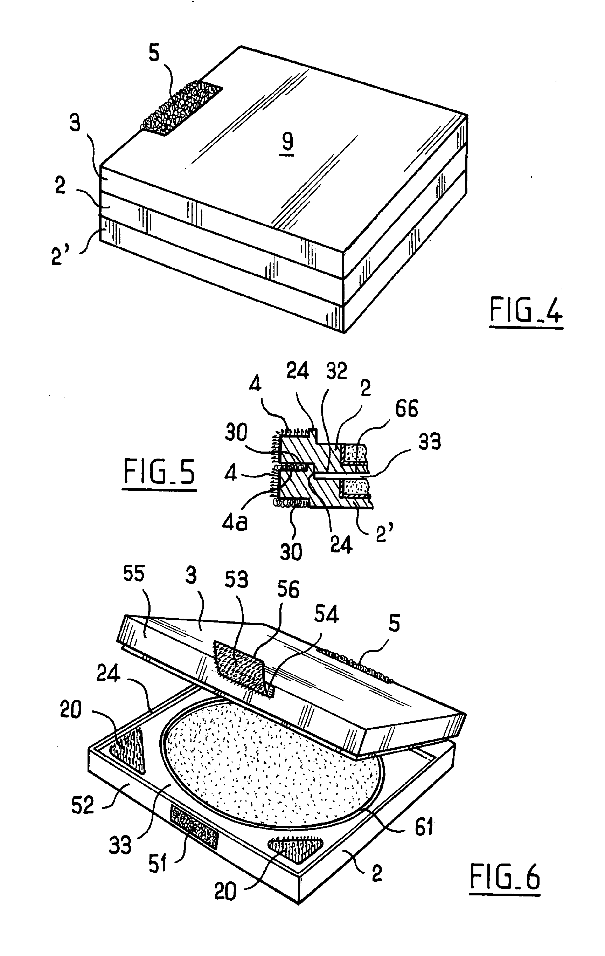

Dans l'exemple des figures 1 et 2, le boîtier 1 ne comporte qu'une seule partie de base 2, mais on peut, sans sortir du cadre de la présente invention, réaliser un boîtier qui en comporte plusieurs, par exemple deux parties de base 2 et 2' superposées, comme illustré à la figure 4.

L'accrochage entre ces parties de base 2 et 2' peut s'effectuer par exemple en prévoyant sur la face inférieure 26 de la partie de base 2 un cinquième élément 30, à boucles, disposé de manière à pouvoir s'accrocher sur la portion 4a du premier élément 4 de la partie de base 2', laquelle peut être identique à la partie de base 2, comme on peut le voir sur la figure 5.

La partie de base 2 peut présenter sur sa face inférieure 66 une partie en saillie 32 agencée pour s'emboîter dans le logement 33 de manière à positionner toujours de la même manière les parties de base 2 et 2' l'une sur l'autre. Chaque partie de base 2 ou 2' peut avantageusement comporter, sur sa face inférieure 66, outre le cinquième élément 30 au moins un sixième élément 40, par exemple deux éléments 40, disposés de manière à s'accrocher sur les éléments 20 de la partie de base 2' immédiatement inférieure, comme on le voit sur la figure 3.

Le cas échéant, un fermoir 50 peut être prévu du côté avant du boîtier 1, ce fermoir comportant par exemple une partie fixe 51 présente sur la face avant 52 de la partie de base 2 et une patte flexible 53 fixée par son extrémité supérieure 54 sur la face avant 55 du couvercle 3 et dont l'extrémité inférieure 56 peut venir se superposer et s'accrocher sur la partie fixe 51 lorsque le boîtier est fermé. Les parties 51 et 53 du fermoir sont par exemple réalisées à partir de bandes Velcro® .

Dans les exemples des figures 1 à 6, la partie de base 2 comporte un logement 60 qui reçoit une coupelle 61, par exemple métallique, contenant un produit P, par exemple un fond de teint, et le couvercle 3 comporte sur sa face inférieure un miroir 63.

On ne sort pas du cadre de la présente invention lorsque le couvercle 3 ne comporte pas de miroir et que la partie de base 2 présente un logement agencé différemment, destiné par exemple à recevoir non pas une coupelle contenant un produit, mais un accessoire tel que par exemple un pinceau ou un applicateur floqué, ou encore plusieurs logements contenant des produits et/ou des applicateurs différents, ces logements pouvant avoir des formes diverses.

On a illustré à la figure 16 la possibilité de disposer dans le fond du logement destiné à recevoir l'applicateur un élément à crochets ou à boucles 90 sur lequel peut s'accrocher l'applicateur ; ce dernier peut être pourvu d'un élément d'application à boucles ou à crochets capable en lui-même de s'accrocher sur l'élément 90. En variante, un élément ayant une nature complémentaire de celle de l'élément 90 peut être disposé sur l'applicateur, par exemple sur son manche.

Le boîtier peut encore être réalisé avec un fermoir différent, comportant par exemple une patte 80 agencée pour s'encliqueter dans un logement correspondant 81, comme illustré à la figure 17.

L'articulation reliant le couvercle 3 à la partie de base 2 peut être réalisée autrement que cela est représenté sur les figures 1 à 6.

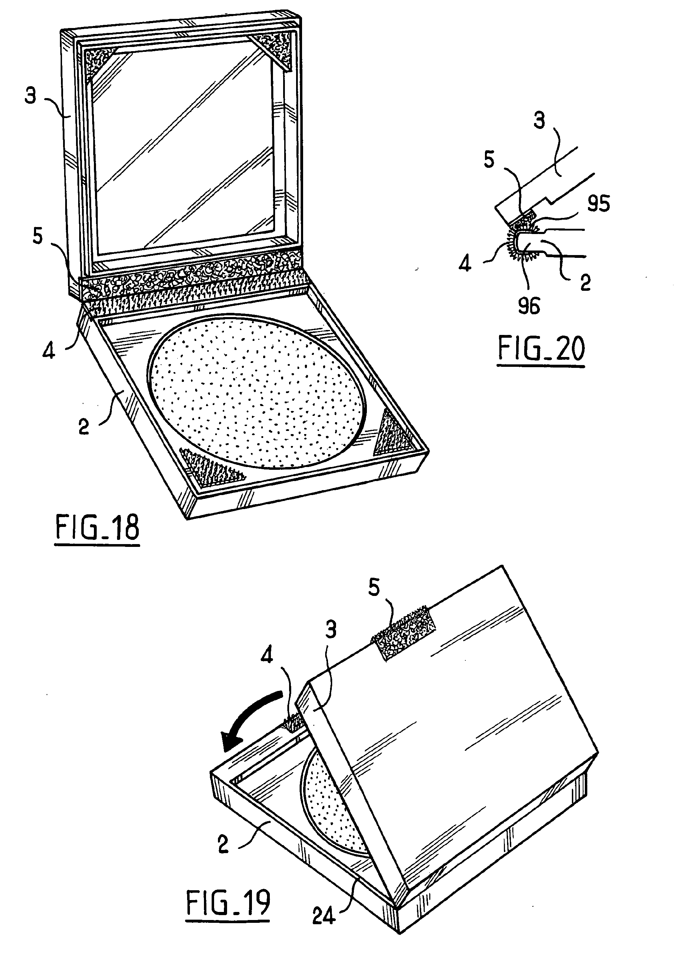

Les premier et deuxième éléments 4 et 5 peuvent s'étendre par exemple sur sensiblement toute la longueur des côtés arrière du couvercle 3 et de la partie de base 2, comme illustré sur la figure 18.

Les premier et deuxième éléments peuvent encore comporter chacun par exemple deux parties.

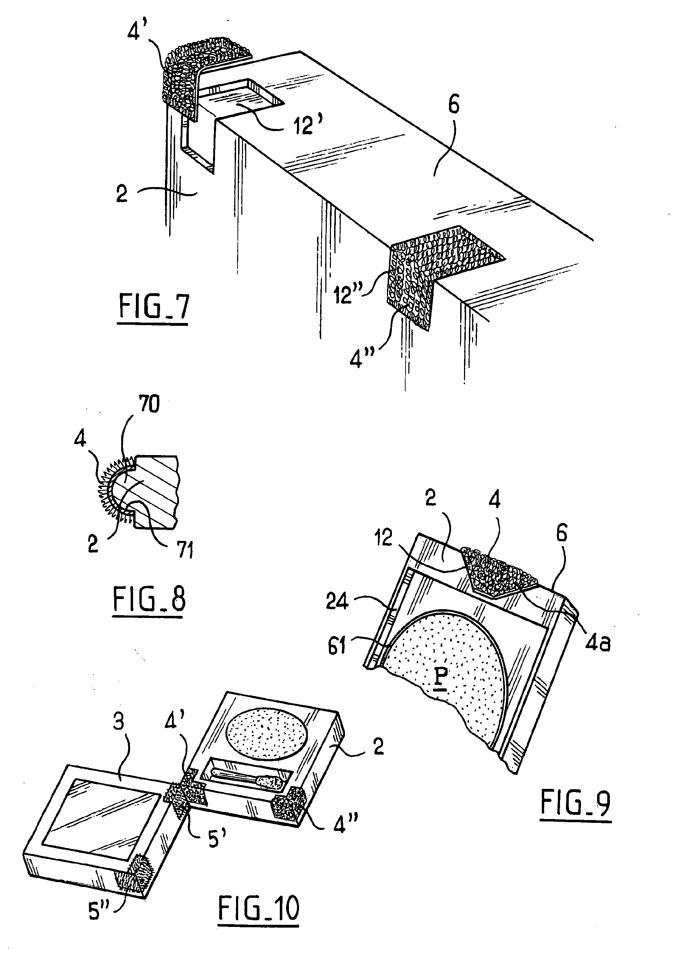

A titre d'illustration, on a représenté à la figure 7 la face arrière 6 de la partie de base 2 et l'on peut voir sur cette figure que le premier élément peut comporter deux parties 4' et 4" situées par exemple à proximité des faces latérales de la partie de base.

Dans l'exemple considéré, les parties 4' et 4" sont reçues dans des renfoncements 12' et 12" de la partie de base 2, lesquelles présentent une profondeur correspondant sensiblement à l'épaisseur du support sur lequel se raccordent les boucles ou les crochets de l'élément, à savoir des boucles sur la figure 7.

La face arrière 6 de la partie de base 2 peut encore être réalisée avec une forme convexe vers l'extérieur et notamment comporter une nervure 70 définissant une surface bombée 71, par exemple en forme de demi-cylindre de révolution, sur lequel est fixé le premier élément 4.

L'un au moins des premier et deuxième éléments de l'articulation peut présenter une largeur variable. A titre d'exemple, on a représenté à la figure 9 la partie de base 2 avec un premier élément 4 qui présente une largeur augmentant en rapprochement de la face arrière 6, afin par exemple de rendre plus facile l'ouverture du boîtier. La portion 4a de l'élément 4 peut être reçue dans un logement 12 de forme correspondante, de contour par exemple sensiblement trapézoïdal.

Lorsque le premier élément est réalisé en deux parties 4' et 4" et que le deuxième élément comporte également deux parties 5' et 5" correspondantes, chacune de ces parties peut s'étendre non seulement sur les faces arrière de la partie de base 2 et du couvercle 3, sur la face supérieure de la partie de base 2 et inférieure du couvercle 3, mais également sur les faces latérales de la partie de base 2 et du couvercle 3, comme illustré sur la figure 10, de manière à permettre par exemple d'assembler côte à côte la partie de base 2 et le couvercle 3 après l'ouverture du boîtier.

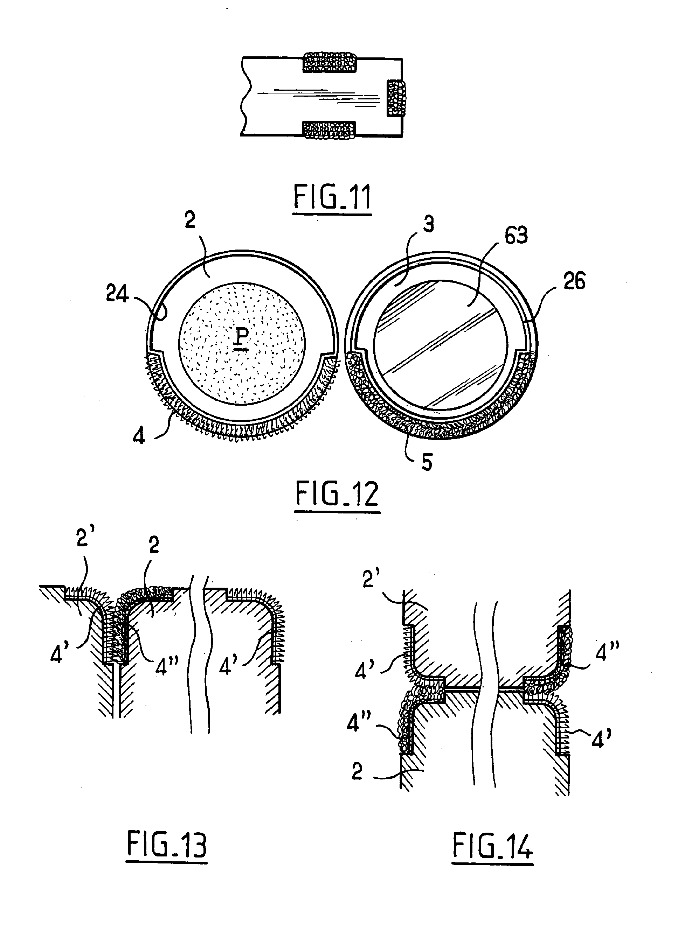

Les éléments à boucles et à crochets servant à l'assemblage d'une partie de base avec une autre partie de base ou avec un couvercle dans au moins deux directions, peuvent également être distincts, comme illustré à la figure 11.

La partie de base et le couvercle peuvent présenter une forme autre que généralement parallélépipédique, et par exemple une forme ayant un contour, lorsque le boîtier est observé de dessus, curviligne, notamment ovale ou circulaire comme représenté à la figure 12.

Sur cette figure, on voit que le premier élément 4 peut s'étendre par exemple sur la moitié de la circonférence de la partie de base 2 et le deuxième élément 5 sur la moitié de la circonférence du couvercle 3.

La disposition des premier et deuxième éléments permet un accrochage tangentiel.

Dans l'exemple de la figure 10, les parties 4' et 4" sont toutes deux à boucles et les parties 5' et 5" à crochets. En variante, les parties 4' et 4" pourraient être toutes deux à crochets et les parties 5' et 5" toutes deux à boucles. L'une des parties 4' pourrait encore être à boucles et l'autre 4" à crochets, de façon à permettre un assemblage côte à côte d'une pluralité de parties de base, comme illustré sur la figure 13, ou encore de disposer deux parties de base 2 et 2' dans le prolongement l'une de l'autre, comme illustré sur la figure 14.

On a illustré sur la figure 19 la façon dont on peut positionner le couvercle 3 sur la partie de base 2 lors de l'assemblage initial des deux. On peut amener les bords avant au contact l'un de l'autre, la nervure 26 du couvercle venant en appui contre le décrochement 24, puis le couvercle est pivoté dans le sens de la flèche.

L'un au moins des premier et deuxième éléments peut être mobile relativement à la partie correspondante du boîtier.

Le premier élément peut ainsi par exemple, être mobile relativement à la partie de base 2, comme illustré à la figure 20.

Sur cette figure 20, on a représenté le premier élément 4 fixé sur un rouleau 95 articulé sur la partie de base au moyen d'un axe non apparent s'étendant entre deux oreilles 96 prolongeant vers l'arrière la partie de base.

Bien entendu, l'invention n'est pas limitée aux exemples qui viennent d'être décrits et l'on peut notamment combiner entre elles les caractéristiques des divers exemples de réalisation.

Dans toute la description, y compris les revendications, l'expression « comportant un » doit être comprise comme étant synonyme de « comportant au moins un », sauf si le contraire est spécifié.

## Revendications

1. Boîtier (1) comportant :
- au moins une partie de base (2 ; 2'),
- un couvercle (3),
- une articulation reliant le couvercle à la partie de base, boîtier **caractérisé par le fait que** l'articulation comporte :
- un premier élément (4 ; 4', 4") fixé sur la partie de base (2 ; 2'), et
- un deuxième élément (5 ; 5' ; 5") fixé sur le couvercle (3), l'un desdits premier et deuxième éléments étant à boucles (13) et l'autre desdits premier et deuxième éléments étant à crochets (14) agencés pour coopérer avec lesdites boucles.

2. Boîtier selon la revendication 1, **caractérisé par le fait que** la partie de base (2) présente des faces arrière (6) et supérieure (7) et **par le fait que** le premier élément (4 ; 4' ; 4") s'étend sur ces faces arrière et supérieure, **par le fait que** le couvercle (3) présente des faces arrière (26) et inférieure (10) et **par le fait que** le deuxième élément (5 ; 5' ; 5") s'étend sur ces faces arrière et inférieure.

3. Boîtier selon l'une des revendications 1 et 2, **caractérisé par le fait que** la partie de base présente une face supérieure (7), **par le fait que** le boîtier comporte au moins un troisième élément (20) sur cette face supérieure, **par le fait que** le couvercle présente une face inférieure (10) et que le boîtier comporte au moins un quatrième élément (21) sur cette face inférieure, l'un des troisième et quatrième éléments étant à boucles et l'autre à crochets, les troisième et quatrième éléments étant disposés de manière à s'accrocher lorsque le boîtier est fermé.

4. Boîtier selon la revendication précédente, **caractérisé par le fait que** la partie de base présente une face inférieure (66) et **par le fait que** le boîtier comporte sur cette face inférieure au moins un cinquième élément (40) à boucles ou à crochets.

5. Boîtier selon la revendication 4, **caractérisé par le fait que** le cinquième élément présente une nature complémentaire de celle du troisième élément, ce cinquième élément (40) étant positionné sur la face inférieure de la partie de base de manière à pouvoir s'accrocher avec au moins un autre troisième élément présent sur une autre partie de base (2') positionnée sous ladite face inférieure.

6. Boîtier selon l'une quelconque des revendications précédentes, **caractérisé par le fait que** la partie de base présente une face inférieure (66) et **par le fait que** le boîtier comporte sur cette face inférieure au moins un sixième élément (30) agencé pour s'accrocher avec un autre premier élément (4) d'une autre partie de base (2') disposée sous ladite face inférieure.

7. Boîtier selon l'une quelconque des revendications précédentes, **caractérisé par le fait que** le premier élément comporte au moins deux parties distinctes (4'; 4").

8. Boîtier selon la revendication précédente, **caractérisé par le fait que** lesdites parties distinctes sont disposées à proximité de faces latérales opposées respectives de la partie de base.

9. Boîtier selon l'une des revendications 7 et 8, **caractérisé par le fait que** les deux parties distinctes présentent des natures complémentaires.

10. Boîtier selon l'une quelconque des revendications 7 à 9, **caractérisé par le fait que** le deuxième élément comporte deux parties distinctes (5'; 5") disposées sur le couvercle de manière correspondante.

11. Boîtier selon l'une quelconque des revendications précédentes, **caractérisé par le fait que** le premier élément (4) présente au moins une portion (4a) qui s'étend sur une face supérieure (7) de la partie de base et qui présente une largeur non constante, notamment une largeur augmentant en rapprochement d'une face arrière (6) de la partie de base.

12. Boîtier selon l'une quelconque des revendications précédentes, **caractérisé par le fait que** le premier élément (4) comporte des portions (4a ; 4b) fixées sur des surfaces sensiblement planes.

13. Boîtier selon l'une quelconque des revendications 1 à 11, **caractérisé par le fait que** le premier élément comporte une portion fixée sur une surface non plane, notamment une surface demi-cylindrique de révolution.

14. Boîtier selon l'une quelconque des revendications précédentes, **caractérisé par le fait que** l'un du couvercle et de la partie de base comporte une patte (53) comportant un élément à boucles ou à crochets et **par le fait que** l'autre du couvercle et de la partie de base comporte une partie (51) servant à l'accrochage de cette patte.

15. Boîtier selon l'une quelconque des revendications précédentes, **caractérisé par** le fait le premier élément (4', 4") s'étend partiellement sur au moins une face latérale de la partie de base.

16. Boîtier selon l'une quelconque des revendications précédentes, **caractérisé par le fait que** le deuxième élément (5', 5") s'étend partiellement sur au moins une face latérale du couvercle.

17. Boîtier selon l'une quelconque des revendications précédentes, **caractérisé par le fait que** la partie de base et le couvercle présentent chacun un contour non rectangulaire, notamment circulaire, lorsqu'observés de dessus, et **par le fait que** les premier et deuxième éléments s'étendent sur des portions respectives de la circonférence de la partie de base et du couvercle.

18. Boîtier selon l'une quelconque des revendications précédentes, **caractérisé par le fait que** le premier élément s'étend à la fois sur les faces supérieure, arrière et sur une face latérale au moins de la partie de base.

19. Boîtier selon l'une quelconque des revendications précédentes, **caractérisé par le fait que** l'un au moins des premier et deuxième éléments est fixé au moins partiellement dans un renfoncement (12 ; 12' ; 12") de la partie de base ou du couvercle.

20. Boîtier selon la revendication 19, **caractérisé par le fait qu'**il comporte au moins un élément à crochets fixé dans un renfoncement de la partie de base ou du couvercle.

21. Boîtier selon l'une quelconque des revendications précédentes, **caractérisé par le fait que** l'un au moins de la partie de base et du couvercle comporte un relief (26) agencé pour coopérer avec un relief complémentaire (33) de l'autre du couvercle et de la partie de base, de manière à positionner le couvercle par rapport à la partie de base quand le boîtier est fermé.

22. Boîtier selon l'une quelconque des revendications précédentes, **caractérisé par le fait que** la partie de base (2) comporte un relief (32) sur une face inférieure, ce relief étant agencé pour coopérer avec un relief (33) de la face supérieure d'une autre partie de base (2') afin de positionner les deux parties de base l'une relativement à l'autre.

23. Boîtier selon l'une quelconque des revendications précédentes, **caractérisé par le fait que** la partie de base comporte un logement (60) recevant au moins un produit (P), notamment un produit contenu dans une coupelle (61).

24. Boîtier selon l'une quelconque des revendications précédentes, **caractérisé par le fait que** la partie de base comporte un logement recevant au moins un applicateur.

25. Boîtier selon la revendication 23, **caractérisé par le fait que** le logement comporte un fond pourvu d'un élément (90) à crochets ou à boucles.

26. Boîtier selon l'une quelconque des revendications précédentes, **caractérisé par le fait que** le couvercle comporte un miroir (63), notamment sur une face inférieure.

27. Boîtier selon l'une quelconque des revendications précédentes, **caractérisé par le fait qu'**il comporte une deuxième partie de base (2') superposée avec la première (2).

28. Boîtier selon la revendication 1, **caractérisé par le fait que** l'un au moins des premier et deuxième éléments est mobile par rapport à la partie correspondante du boîtier.
